# EUROPEAN PATENT SPECIFICATION

(11) **EP 2 869 955 B1**
(45) Date of publication and mention of the grant of the patent: **02.01.2019**
(21) Application number: 13742534.4
(22) Date of filing: 01.07.2013
(51) Int. Cl.: B23C 3/12, B23C 5/12, B23C 5/04

(54) **BEVELING CUTTER HAVING HELICAL EDGED BLADES AND DISCHARGE GROOVES**
KEGELSCHNEIDER MIT SPIRALKANTIGEN KLINGEN UND ENTLADUNGSNUTEN
FRAISE DE BISEAUTAGE POSSÉDANT DES LAMES À BORDS HÉLICOÏDAUX ET DES RAINURES D'ÉVACUATION

(30) Priority: 04.07.2012 KR 20120073018; 04.07.2012 US 201261956999 P
(43) Date of publication of application: 13.05.2015
(73) Proprietor: Bevel Tools Holding B.V., 6883 JN Velp (NL)
(72) Inventor: DIECKILMAN, Thomas, M., Carlsbad, CA 92010 (US); PARK, Chang Woo, Bangbae-2 dong 946-17 (KR)
(74) Representative: De Vries & Metman
(86) International application number: PCT/NL2013/000037
(87) International publication number: WO 2014/007608

(56) References cited:
- WO-A1-2011/056507
- CH-A1- 701 414
- CN-A- 102 398 117
- DE-U1-202006 006 114
- JP-A- H0 871 831
- KR-A- 20100 093 020
- US-A- 2 782 490
- US-A- 5 176 476
- US-A1- 2005 025 584
- US-A1- 2005 089 383

## Description

### Technical Field

The present invention relates to a beveling cutter according to the preamble of claim 1 capable of machining a beveled edge on metal using helical shaped cutting blades and discharge grooves which can machine an edge on a metal work piece with more uniformity while eliminating vibration and chattering often experienced when beveling metal with traditional tools.

Such a beveling cutter is known from KR 2010 0093020 A.

### Background Art

The beveling machines of the related art include a drive unit and a power transmission unit in a main body having the function of a handle with a spindle mounted on a head unit, which spindle is rotated by power from the power transmission unit. The beveling cutter is mounted on the free end of the spindle. A base or guide plate is installed between the spindle and the power transmission unit which serves as a depth guide on one side of the bevel. A cam bearing is attached over the top of the beveling cutter which serves as a depth guide on the opposite side of the bevel.

In beveling machines with such a configuration, the edge of a work piece is aligned with the cutter, the driving unit in the body is driven by an electric or a pneumatic motor, and the driving force rotates the spindle through the power transmission unit. With the rotation of the spindle, the router bit at the free end is rotated and machines a predetermined shape on the work piece.

When the edge of a work piece is machined, however, metal beveling machines often have a problem when the work piece and the cutter come in contact with each other, the spindle chatters, leaving an imperfect edge and the internal parts of the motor transmission can be damaged from shock due to the chattering.

The beveling cutter disclosed in an embodiment includes a body with a shaft hole formed through the center, a plurality of ten (10) cutter blades extending at regular intervals with a helix angle of 1 to 40 degrees around the shaft hole on the outer circumferential surface of the body while having both sides that are beveling sides, discharge grooves formed longitudinally between the cutter blades to discharge chips produced in beveling, and cutting grooves recessed on the surfaces of the cutter blades. As such, it is possible to discharge chips even if long plane chips are produced and to machine an edge uniformly when beveling.

### Disclosure of Invention

### Problem to be Solved by the Invention

In order to eliminate problems in the cutters of beveling machines of the related art, one objective of the present invention is to provide a beveling cutter that can machine a metal surface to a uniform shape and finish with uniform roughness when beveling a work piece.

Another objective of the present invention is to provide a beveling cutter that can easily discharge chips and scrap originating from the beveling process without generating flames when discharging.

Another objective of the present invention is to provide a beveling cutter that can prevent damage to cutter blades and reduce load in beveling.

### Means for Solving Problem

In order to achieve the objectives the present invention provides a beveling cutter according to claim 1. The beveling cutter includes: a body with a shaft hole formed through the center; a plurality of cutter blades arranged at predetermined distances on the circumferential surface of the body, each having a radial primary blade with a radial primary relief angle ranging from 5 to 15 degrees and a radial secondary blade with a radial secondary relief angle ranging from 16 to 30 degrees; discharge grooves formed longitudinally between the cutter blades to discharge chips produced in beveling; and a key groove formed at a portion inside the body.

Rake angle portions may be formed at an angle ranging from 10 to 20 degrees on a plurality of the cutter blades.

Helical shape cutter blades may have a core taper angle ranging from 20 to 30 degrees.

Honed portions may be formed by honing a side of the radial primary blades at an angle ranging from 1 to 45 degrees to prevent the cutter blades from breaking or chattering.

### Effect of the Invention

With a beveling cutter such as that in the present invention, since the radial primary relief angle and the radial secondary relief angle range from 5 to 15 degrees and from 16 to 30 degrees, respectively, there are advantages in that it is possible to reduce load generated in the beveling of a work piece and to prevent machining interference and chattering by ensuring a sufficient gap between the work piece and the radial primary blades.

Additionally, with a beveling cutter such as that in an embodiment, since the honed portion is formed at a side of the radial primary blade, there is the advantage in that it is possible to prevent the cutter blades from breaking and chattering. Further, since the core taper angle of the beveling cutter ranges from 20 to 30 degrees, there is the advantage in that it is possible to increase the stiffness and lifespan of the beveling cutter.

With a beveling cutter such as that in an embodiment, since rake angle portions are formed in the range of angle of 10 to 20 degrees, there is also the advantage in that it is possible to smoothly discharge chips produced in beveling of a work piece, even without specific cutting grooves.

### Brief Description of Drawings

FIG. 1 is a perspective view showing a beveling cutter according to an embodiment of the present invention;
FIG. 2 is a view illustrating radial primary and secondary relief angles of a cutter blade that is a main part of the present invention;
FIG. 3 is a view illustrating the core taper of a cutter blade that is a main part of the present invention;
FIG. 4 is a side view illustrating a helix angle of a cutter blade that is a main part of the present invention;
FIG. 5 is a view showing an example of the use of the beveling cutter of the present invention; and
FIG. 6 are views showing other embodiments of the beveling cutter of the present invention.

### Best Mode(s) of Carrying Out the Invention

In the following and in line with the embodiments of the present invention, beveling cutters will be described in detail with reference to the accompanying drawings.

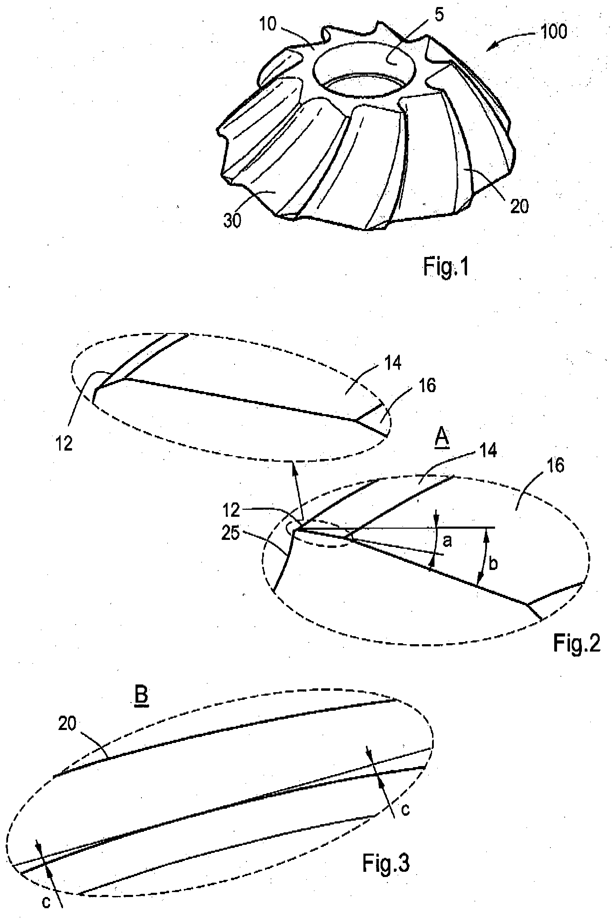

FIG. 1 is a perspective view showing a beveling cutter according to an embodiment of the present invention,
FIG. 2 is a view illustrating radial primary and secondary relief angles of a cutter blade that is a main part of the present invention,
FIG. 3 is a view illustrating a core taper of a cutter blade that is a main part of the present invention, and

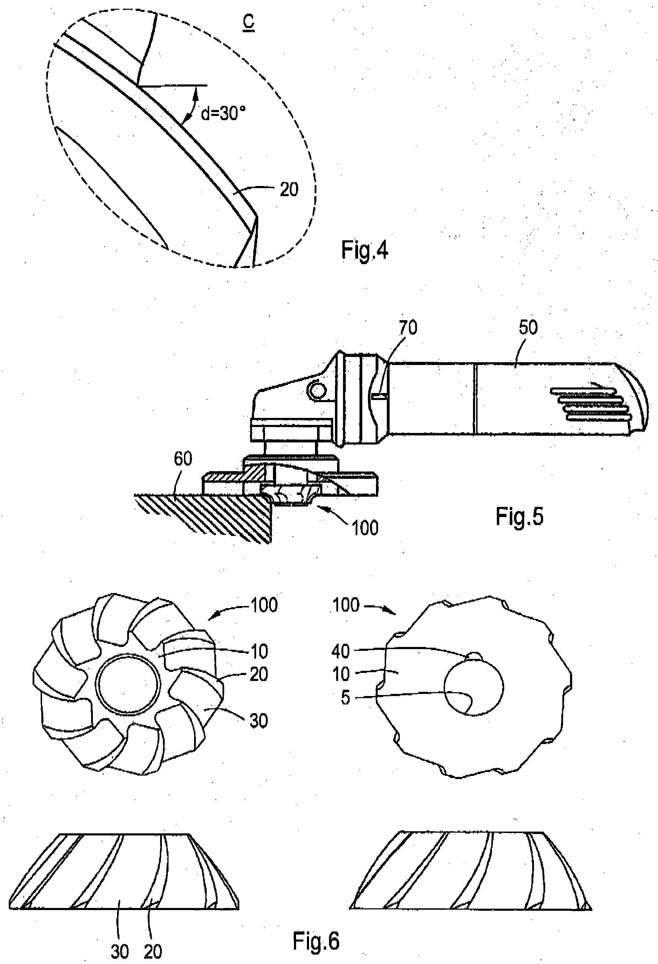

FIG. 4 is a side view illustrating a helix angle of a cutter blade that is a main part of the present invention.

Beveling cutter 100 in the form of an embodiment of the present invention, as shown in FIGS. 1 to 4 includes a body 10, a plurality of cutter blades 20 arranged at predetermined distances on the circumferential surface of the body 10, discharge grooves 30 formed longitudinally between the cutter blades 20 to discharge chips produced in beveling, and a key groove 40 formed at a portion inside the body 10.

The body 10 of the beveling cutter 100, as shown in FIG. 1, has a shaft hole 5 formed through the center and ten (10) cutter blades 20 arranged at predetermined distances. The key groove 40 is formed at a portion inside the body 10. Though not shown in the figures, it is possible to simply mount the beveling cutter on an electric or a pneumatic air tool by inserting a cutter fixing key into the key groove 40 and tightening a cutter fixing bolt in a bolt hole formed at the center of a rotary shaft to firmly fix the beveling cutter.

The cutter blades 20 are arranged at predetermined distances on the circumferential surface of the body 10, as shown in FIG. 2, each of which has a radial primary blade 14 with a radial primary relief angle (a) ranging from 5 to 15 degrees and a radial secondary blade 16 with a radial secondary relief angle (b) ranging from 16 to 30 degrees. The width of the radial primary blade 14 is 0.6 to 0.7mm and the width of the radial secondary blade 16 is 1.9 to 2.0mm. The helix angle (d) of the cutter blades ranges from 5 to 45 degrees.

The radial primary relief angle (a) is selected to an optimal angle, 5 to 15 degrees, to reduce load generated in the beveling of a work piece. Honed portions 12 are formed by honing a side of the radial primary blades 14 at an angle ranging from 1 to 45 degrees to prevent the cutter blades from breaking or chattering. Although the honed portions 12 may be 0.05 to 0.2mm wide, it is preferable to make them 0.1mm wide.

The radial secondary relief angle (b) is selected to an optimal angle, 16 to 30 degrees, to prevent machining interference and chattering by ensuring a sufficient gap between a work piece 60 and the radial primary blade 14 in beveling.

A round portion 22, which has a radius (r) ranging from 0.1 to 3.0, is formed at the end of the cutter blade 20 to prevent damage to the cutter blade and to keep a worker safe.

As shown in FIG. 2, a rake angle portion may be formed on the cutter blades 20, at an appropriate angle in the range of 10 to 20 degrees for smooth discharge of chips (not shown) produced when machining a work piece, with chips smoothly discharged even without specifically forming a cutting groove (not shown) on the cutter blades. In other words, the discharge of chips is induced by forming a cutting groove at a predetermined portion on cutter blades in the related art, whereas the rake angle portion 25 is formed at an appropriate angle (that is, 10 to 20 degrees) herein so that chips produced in machining (beveling) of work piece 60 are smoothly discharged without flying to the cutter blades or the work piece 60.

The cutter blades 20 have a core taper angle (c) ranging from 20 to 30 degrees, as shown in FIG. 3. The core taper angle (c), an important factor for increasing stiffness and lifespan of the cutter blades 20, is preferably set within the range of angle described above (20 to 30 degrees).

Although the embodiment described above is based on a beveling angle of 30 degrees, the beveling angle may be 37.5 degrees and 45 degrees in other embodiments of the present invention, as shown in FIGS. 6 and 7. Other factors, including the helix angle, the radial primary relief angle (a), and the radial secondary relief angle (b) are almost similar to those in the embodiment described above and thus the detailed description is not provided below.

The description below shows how to mount the beveling cutter of the present invention with the configuration described above on a pneumatic air or an electric tool 50 and to bevel a work piece.

The beveling cutter 100 according to an embodiment of the present invention is mounted, as shown in FIG. 5, by fitting a rotary shaft (not shown) of a pneumatic air or an electric tool 50 into the shaft hole 5 at the center of the body 10, aligning the key groove 40 inside the body 10 with a key groove on the rotary shaft, and inserting a key into the key grooves, and is then fastened by fasteners (the parts [key groove, key, and fasteners] for fastening the beveling cutter on the pneumatic air or the electric tool 50, because the beveling cutter is addressed herein).

With the beveling cutter 100 fastened to the pneumatic air or electric tool as shown 50, as described above, when the beveling cutter 100 is brought in contact with the work piece 60 and then power switch 70 is turned on, a drive unit (not shown) operates and rotates the cutter blades 20 of the beveling cutter 100.

When the cutter blades 20 rotate, beveling on the work piece 60 starts.

Chips (not shown) that are produced by the beveling surfaces of the cutter blades 20 are discharged through the discharge grooves 30 in beveling work piece 60. Further, the cutter blades 20 are generally coated, so that the chips are easily discharged without damaging the surfaces of the cutter blades 20.

Since the cutter blades 20 have the honed portion 12 on a side of the radial primary blade 14, the cutter blades 20 can be prevented from breaking and the surface roughness of work piece 60 can be improved in beveling work piece 60. Further, small particles are sintered in the honed portion 12, so that beveling can be implemented by the cutter blades with very sharp lines even in high-speed rotation while the lifespan of the cutter blades 20 can be considerably increased and high-quality surfaces can be achieved.

Since the radial primary blade 14 has a radial primary relief angle (a) ranging from 5 to 15 degrees, the load generated in beveling can be reduced. Further, since the radial secondary relief angle (b) of the radial secondary blade 16 connected with the radial primary blade 14 ranges from 16 to 30 degrees, a sufficient gap is ensured between work piece 60 and radial primary blade 14 in beveling and thus machining interference and chattering can be prevented.

### Industrial Applicability

The beveling cutter of the present invention is available for various types of beveling including paint edge, weld edge, architectural edge, saddle, countersink, interior edge, straight edges and on automated edge machines. The beveling cutter of the present invention is available for all types of metal work including on carbon and stainless steel, on aluminum, iron, on nonferrous and on most exotic metals.

**Explanations of Letters or Numerals**

| | |
|---|---|
| 12: Honed Portion | 16: Radial Secondary Blade |
| 20: Cutter Blade | 25: Rake Angle Portion |
| 30: Discharge Groove | 40: Key Groove |
| a: Radial Primary Relief Angle | b: Radial Secondary Relief Angle |
| c: Core Taper Angle | d. Helical Angle |

## Claims

1. A beveling cutter (100) having a beveling angle and including a body (10) with a shaft hole formed through the center, a plurality of cutter blades (20) arranged at predetermined distances on the circumferential surface of the body (10), and discharge grooves (30) formed longitudinally between the cutter blades (20) to discharge chips produced in beveling, **characterized in that** the cutter blades (20) each have a radial primary blade (14) with a radial primary relief angle (a) ranging from 5 to 15 degrees and a radial secondary blade (16) with a radial secondary relief angle (b) ranging from 16 to 30 degrees, a key groove (40) is formed at a portion inside the body (10) and the helix angle of the cutter blades (20) ranges from 5 to 45 degrees.

2. The beveling cutter (100) of claim 1, wherein the width of the radial primary blade (14) ranges from 0.6 to 0.7 mm and the width of the radial secondary blade (16) ranges from 1.9 to 2.0 mm.

3. The beveling cutter (100) according to any one of the preceding claims, wherein a rake angle portion (25) is formed at an angle ranging from 10 to 20 degrees on the cutter blades (20).

4. The beveling cutter (100) according to any one of the preceding claims, wherein the cutter blades (20) have a core taper angle (c) ranging from 20 to 30 degrees.

5. The beveling cutter (100) according to any one of the preceding claims, wherein honed portions (12) are formed by honing a side of the radial primary blades (14) at an angle ranging from 1 to 45 degrees to prevent the cutter blades (20) from breaking or chattering.

6. The beveling cutter (100) of claim 5, wherein the width of the honed portions (12) ranges from 0.05 to 0.2 mm.

## Patentansprüche

1. Ein Anfasschneider (100), welcher einen Anfaswinkel hat, aufweisend einen Körper (10) mit einem Schaftloch, welches durch die Mitte geformt ist, eine Mehrzahl von Schneidklingen (20), welche mit vorbestimmten Abständen an der Umfangsfläche des Körpers (10) angeordnet sind, und Ausgabenuten (30), welche längs zwischen den Schneidklingen (20) geformt sind, um beim Anfasen erzeugte Späne auszugeben, **dadurch gekennzeichnet, dass** jede der Schneidklingen (20) eine Radial-Primärklinge (14) mit einem Radial-Primär-Freiwinkel (a) in einem Bereich von 5 bis 15 Grad und eine Radial-Sekundärklinge (16) mit einem Radial-Sekundär-Freiwinkel (b) in einem Bereich von 16 bis 30 Grad hat, eine Schlüsselnut (40) an einem Abschnitt innerhalb des Körpers (10) geformt ist und der Schrägungswinkel der Schneidklingen (20) in einem Bereich von 5 bis 45 Grad liegt.

2. Der Anfasschneider (100) gemäß Anspruch 1, wobei die Breite der Radial-Primärklinge (14) in einem Bereich von 0,6 bis 0,7 mm liegt und die Breite der Radial-Sekundärklinge (16) in einem Bereich von 1,9 bis 2,0 mm liegt.

3. Der Anfasschneider (100) gemäß irgendeinem der vorhergehenden Ansprüche, wobei ein Spanwinkelabschnitt (25) an den Schneidklingen (20) mit einem Winkel in einem Bereich von 10 bis 20 Grad geformt ist.

4. Der Anfasschneider (100) gemäß irgendeinem der vorhergehenden Ansprüche, wobei die Schneidklingen (20) einen Kern-Verjüngungswinkel (c) haben, welcher in einem Bereich von 20 bis 30 Grad liegt.

5. Der Anfasschneider (100) gemäß irgendeinem der vorhergehenden Ansprüche, wobei gehonte Abschnitte (12) durch Honen einer Seite der Radial-Primärklingen (14) mit einem Winkel in einem Bereich von 1 bis 45 Grad geformt sind, um die Schneidklingen (20) daran zu hindern, zu brechen oder zu rattern.

6. Der Anfasschneider (100) gemäß Anspruch 5, wobei die Breite der gehonten Abschnitte (12) in einem Bereich von 0,05 bis 0,2 mm liegt.

## Revendications

1. Fraise de biseautage (100) ayant un angle de biseautage et comportant un corps (10) avec un trou d'arbre formé à travers le centre, une pluralité de lames de fraise (20) agencées à des distances prédéterminées sur la surface circonférentielle du corps (10), et des rainures d'évacuation (30) formées longitudinalement entre les lames de fraise (20) pour évacuer des copeaux produits lors du biseautage, **caractérisée en ce que** les lames de fraise (20) ont chacune une lame principale radiale (14) avec un angle de dépouille principal radial (a) valant de 5 à 15 degrés et une lame secondaire radiale (16) avec un angle de dépouille secondaire radial (b) valant de 16 à 30 degrés, une rainure à clavette (40) est formée au niveau d'une portion à l'intérieur du corps (10) et l'angle d'hélice des lames de fraise (20) vaut de 5 à 45 degrés.

2. Fraise de biseautage (100) selon la revendication 1, dans laquelle la largeur de la lame principale radiale (14) vaut de 0,6 à 0,7 mm et la largeur de la lame secondaire radiale (16) vaut de 1,9 à 2,0 mm.

3. Fraise de biseautage (100) selon l'une quelconque des revendications précédentes, dans laquelle une portion d'angle d'inclinaison (25) est formée à un angle valant de 10 à 20 degrés sur les lames de fraise (20).

4. Fraise de biseautage (100) selon l'une quelconque des revendications précédentes, dans laquelle les lames de fraise (20) ont un angle d'entrée de foret aléseur (c) valant de 20 à 30 degrés.

5. Fraise de biseautage (100) selon l'une quelconque des revendications précédentes, dans laquelle des portions rodées à la pierre (12) sont formées en rodant à la pierre un côté des lames principales radiales (14) selon un angle valant de 1 à 45 degrés pour empêcher les lames de fraise (20) de se rompre ou de se briser.

6. Fraise de biseautage (100) selon la revendication 5, dans laquelle la largeur des portions rodées à la pierre (12) vaut de 0,05 à 0,2 mm.
